# EUROPÄISCHE PATENTSCHRIFT

(11) **EP 3 386 813 B1**
(45) Veröffentlichungstag und Bekanntmachung des Hinweises auf die Patenterteilung: **21.07.2021**
(21) Anmeldenummer: 16797740.4
(22) Anmeldetag: 07.11.2016
(51) Int. Cl.: B60T 8/17, B60T 8/1766

(54) **VERFAHREN ZUM EINSTELLEN VON BREMSDRÜCKEN AN PNEUMATISCH BETÄTIGTEN RADBREMSEN EINES FAHRZEUGS, BREMSANLAGE ZUR DURCHFÜHRUNG DES VERFAHRENS SOWIE FAHRZEUG**
METHOD FOR ADJUSTING BRAKE PRESSURES ON PNEUMATICALLY ACTUATED WHEEL BRAKES OF A VEHICLE, BRAKE SYSTEM FOR CARRYING OUT THE METHOD, AND VEHICLE
PROCÉDÉ DE RÉGLAGE DE PRESSIONS DE FREINAGE APPLIQUÉES À DES FREINS SUR ROUES À COMMANDE PNEUMATIQUE D'UN VÉHICULE, SYSTÈME DE FREINAGE POUR LA MISE EN OEUVRE DUDIT PROCÉDÉ, AINSI QUE VÉHICULE

(30) Priorität: 09.12.2015 DE 102015015922
(43) Veröffentlichungstag der Anmeldung: 17.10.2018
(73) Patentinhaber: ZF CV Systems Hannover GmbH, 30453 Hannover (DE)
(72) Erfinder: ECKERT, Horst, 31547 Rehburg-Loccum (DE); SCHWAGMEYER, Florian, 31700 Heuerssen (DE)
(74) Vertreter: Rabe, Dirk-Heinrich
(86) Internationale Anmeldenummer: PCT/EP2016/001837
(87) Internationale Veröffentlichungsnummer: WO 2017/097389

(56) Entgegenhaltungen:
- US-A- 5 163 742
- US-A- 6 009 366
- US-A1- 2005 001 477
- US-A1- 2009 134 698
- US-A1- 2015 046 057

## Beschreibung

Die Erfindung betrifft ein Verfahren zum Einstellen von Bremsdrücken an pneumatisch betätigten Radbremsen eines Fahrzeugs gemäß Anspruch 1. Die Erfindung betrifft außerdem eine Bremsanlage eines Fahrzeugs gemäß Anspruch 10 sowie ferner gemäß Anspruch 11 ein Fahrzeug mit einer solchen Bremsanlage zur Durchführung des Verfahrens.

Zum Abbremsen eines Fahrzeugs werden die Räder des Fahrzeugs gebremst. Bei Kraftfahrzeugen und insbesondere bei Nutzfahrzeugen weisen die Radbremsen der Räder jeweils Bremszylinder auf. Der gewünschte Bremsdruck in den Bremszylindern wird in der Regel pneumatisch erzeugt.

In einem Normalbremsmodus wird der Bremsdruck unmittelbar vom Fahrer des Kraftfahrzeugs eingestellt. Seine Fahrerbremsanforderung übermittelt der Fahrer in der Regel durch Betätigung eines Bremspedals. Mittels des Bremspedals wird in der Regel ein Betriebsbremsventil betätigt und dadurch die Bremszylinder aus einem Druckvorrat versorgt.

Alternativ zum Normalbremsmodus übernimmt eine Bremssteuereinheit die Einstellung der Bremsdrücke in einem Drucksteuermodus, wobei der Bremsdruck nach den Vorgaben der Bremssteuereinheit bei Feststellung entsprechender Bremsbedürfnisse eingestellt wird. Derartige Bremsbedürfnisse können beispielsweise durch die Umsetzung von Fahrstabilitätsfunktionen wie einer Antiblockierfunktion sein, wenn die Steuereinheit das Vorliegen einer Blockierneigung bestimmter Räder feststellt. DE 10 2009 058 154 A1 offenbart eine derartige Bremsanlage, deren Bremssteuereinheit außerdem die Einstellung des Bremsdrucks im Drucksteuermodus zur Umsetzung externer Bremsanforderungen übernimmt. Externe Bremsanforderungen sind von der Fahrerbremsanforderung unabhängig und werden beispielsweise von externen Fahrerassistenzsystemen der Bremssteuereinheit vorgegeben. Fahrerassistenzsysteme als von der Bremssteuereinheit getrennt ausgeführte Systeme geben Signale entsprechend der gewünschten Bremsleistung an die Bremssteuereinheit der Bremsanlage aus, beispielsweise über einen Datenbus.

Bei der bekannten Bremsanlage führt die Bremssteuereinheit eine Steuerung der Bremsanlage zur Umsetzung von Fahrstabilitätsfunktionen wie Antiblockiereingriffe oder auch Stabilitätsregelungen sowie zusätzlicher externer Bremsanforderungen durch. Ferner werden gleichzeitige Fahrerbremsanforderungen umgesetzt. Die externe Bremsanforderung wird der Bremssteuereinheit als Sollverzögerungswert vorgegeben, das heißt, als Wert, welcher die von der Fahrerassistenz gewünschte Verzögerung des Kraftfahrzeugs repräsentiert. In einer Situation, in der im Drucksteuermodus sowohl zumindest eine externe Bremsanforderung als auch eine Fahrerbremsanforderung umzusetzen ist, das heißt, der Fahrer bremst zu einer externen Bremsanforderung hinzu, stellt die Bremssteuereinheit den Bremsdruck an den jeweiligen Bremsen entsprechend einem resultierenden Sollverzögerungswert der Fahrzeugverzögerung ein. Bei der bekannten Bremsanlage werden die Fahrerbremsanforderung und die externe Bremsanforderung additiv verknüpft. Alternativ soll bei der bekannten Bremsanlage in einem Modus "Maximum" die Bremssteuereinheit den Maximalwert aus einem von der Bremsanlage intern angeforderten Sollverzögerungswert aufgrund einer Fahrerbremsanforderung und einen extern angeforderten Sollverzögerungswert bilden. Eine extern angeforderte Bremsanforderung wird dabei nur dann eingestellt, wenn sie höher ist als die interne Bremsanforderung.

Die Übernahme der Einstellung des Bremsdrucks im Drucksteuermodus durch eine Bremssteuereinheit bei Vorliegen einer Blockierneigung bestimmter Räder ist unter der Bezeichnung "Antiblockiersystem"(ABS) bekannt. Bei jeder Bremsung kann nämlich nur eine dem Fahrbahnreibwert entsprechende Bremskraft genutzt werden. Übersteigt die eingesteuerte Bremskraft die maximal übertragbare Bremskraft an einem oder mehreren Rädern, beginnen diese zu blockieren, wodurch das Kraftfahrzeug instabil werden kann. Ein Antiblockiersystem überwacht permanent über Messsignale von Drehzahlsensoren die Drehzahl jedes Rades und ermittelt daraus den jeweiligen Radschlupf. Dies kann beispielsweise durch Vergleich der aus der Raddrehzahl ermittelten Radgeschwindigkeit mit einer (errechneten) Fahrzeugreferenzgeschwindigkeit erfolgen. Wird über den so ermittelten Radschlupf eine Blockierneigung des Rades erkannt, das heißt eine vorgegebene Schlupfgrenze ist erreicht oder überschritten, übernimmt die Bremssteuerung die Kontrolle über die Einstellung des Bremsdrucks. Dabei erfolgt in einem ersten Schritt eine Senkung des Bremsdrucks, um anschließend den Bremsdruck des betreffenden Rades entlang der Schlupfgrenze zu regeln. Dabei wird das Bremsmoment solange weiter erhöht, bis ein dem Fahrbahnreibwert entsprechendes Bremsmoment erreicht ist. Grundsätzlich wird dadurch das Kraftfahrzeug nahezu optimal abgebremst und gleichzeitig die Stabilität und Lenkfähigkeit erhalten.

DE 38 29 951 A1 offenbart ein Verfahren zur Durchführung einer lastabhängigen Regelung des Bremsdrucks an einem Nutzfahrzeug, welches die Komponenten eines vorhandenen Antiblockiersystems ausnutzt, um damit im Normalbremsmodus eine auch weit unterhalb der Blockiergrenze wirkende, automatisch-lastabhängige Bremsfunktion (ALB) zu realisieren. Bei dem bekannten Verfahren soll der Bremsdruck und damit die Bremskraftverteilung achsspezifisch unterhalb der Blockiergrenze geregelt werden, wobei eine zwischenachsige Bremsdruckverteilung nach Maßgabe der Auswertung der von den Drehzahlsensoren gelieferten Raddrehzahlsignalen in einem Schlupfbereich unterhalb des Bereichs, in dem die Antiblockierfunktion wirksam wird, automatisch geregelt wird.

Setzt eine bekannte Bremsanlage gemäß DE 10 2009 058 154 A1 im Drucksteuermodus eine externe Bremsanforderung um und erkennt dann einen Regelungsbedarf der Antiblockierfunktion, das heißt an mindestens einem Fahrzeugrad wird das Erreichen oder Überschreiten der Schlupfgrenze festgestellt, übernimmt die Antiblockierfunktion die Kontrolle über die Einstellung des Bremsdrucks im Drucksteuermodus. Bei der Umsetzung der externen Bremsanforderung stehen da nämlich an den Drucksteuerventilen an allen Achsen die vollen Vorratsdrücke an. Die Einstellung des Bremsdrucks entsprechend der externen Bremsanforderung und der entsprechenden Fahrzeugverzögerung wird erschwert und nicht zuletzt sinken dadurch die Sicherheit der Bremsung und der Fahrkomfort. Insbesondere kommt es immer wieder zu einem unerwünschten Rucken aufgrund plötzlicher Steigerung des Bremsdrucks im Rahmen der Antiblockierfunktion.

In der US 2015/0046057 A1 sind Verfahren und Vorrichtungen für die elektronische Kontrolle der Bremskraftverteilung gemäß dem Differentialschlupf offenbart. Bei niedrigem oder mittlerem Fahrerbremswunsch und im Falle eines leeren oder gering beladenen Fahrzeugs interveniert eine Kontrolllogik bevor eine ABS Kontrolle bei der Hinterachse einsetzt. Wenn aber ein starker Fahrerbremswunsch erkannt wird, wird ein sanfterer Übergang in die ABS Kontrolle sichergestellt, indem Differenzschlupfschwellen an die Stärke des Fahrerbremswunsches angepasst werden.

Der vorliegenden Erfindung liegt die Aufgabe zugrunde, bei einer Einstellung des Bremsdrucks in einem Drucksteuermodus nach externer Bremsanforderung zuverlässig ein ruckfreies und stetiges Bremsverhalten des Fahrzeugs zu gewährleisten.

Diese Aufgabe wird erfindungsgemäß durch ein Verfahren mit den Merkmalen des Anspruchs 1 gelöst. Die Aufgabe wird außerdem durch eine Bremsanlage mit den Merkmalen des Anspruchs 10 und ein Fahrzeug mit den Merkmalen des Anspruchs 11 gelöst.

Gemäß der Erfindung ermittelt die Bremssteuereinheit im Normalbremsmodus zwischenachsige Bremsverteilungsindices für jeweilige Achsenpaare und hält diese für eine spätere Berücksichtigung im Drucksteuermodus bereit. Unter einem Achsenpaar ist dabei ein Paar aus zwei Achsen zu verstehen. Im Drucksteuermodus werden die im Normalbremsmodus ermittelten Bremsverteilungsindices zur Gewichtung der Steuersignale für das jeweilige Achsenpaar herangezogen. Die Ermittlung der Bremsverteilungsindices erfolgt durch Bewertung der Veränderung eines Differenzschlupfwerts innerhalb eines Bewertungsintervalls, wobei der Differenzschlupfwert als Differenz zwischen den Schlupfwerten zweier Räder oder Achsen des Fahrzeugs bestimmt wird.

Bei dem erfindungsgemäßen Verfahren zum Einstellen von Bremsdrücken wird bei normalen Fahrerbremsungen, das heißt im Normalbremsmodus, ein unter den gegebenen Umständen ideales Bremsverteilungsverhältnis zwischen zwei Achsen ermittelt beziehungsweise gelernt. Dabei werden gegebene Umstände wie beispielsweise die Masse des Fahrzeugs oder die Verteilung der Beladung im Fahrzeug und damit einhergehende Belastung der Achsen und auch andere Einflüsse auf das Bremsverhalten wie zum Beispiel unterschiedliche Bremszylindergrößen sowie weitere Einflüsse berücksichtigt. Als ideales zwischenachsiges Verteilungsverhältnis wird ein solches Verhältnis angesehen, wenn bei einer Bremsung an beiden Achsen eines Radpaares gleichzeitig, beziehungsweise nahezu gleichzeitig, Regelungsbedarf einer Antiblockierfunktion eintritt. Durch die erfindungsgemäße Bereitstellung eines zwischenachsigen Bremsverteilungsindex für das jeweilige Achsenpaar kann im Drucksteuermodus eine optimale Gewichtung im Hinblick auf eine ideale zwischenachsige Bremsverteilung erreicht werden.

Die Erfindung hat erkannt, dass während einer Bremsung aufgrund externer Bremsanforderung das Auftreten einer Blockierneigung aufgrund der hohen Priorität einer Antiblockierfunktion dazu führt, dass die Bremssteuereinheit wenigstens ein Rad oder eine Achse entlang der jeweiligen Schlupfgrenze regelt und somit bis zum Ende eines Antiblockiereingriffs die maximale Bremskraft auf die Fahrbahn übertragen wird. Aufgrund der hohen Priorität der Antiblockiereingriffe können andere Funktionen des Bremsenmanagements nicht oder nur sehr eingeschränkt ausgeführt werden, beispielsweise Bremsverschleißregelungen oder Regelungen der Fahrzeugverzögerung während des Bremsvorgangs. Insbesondere bei einem mit keiner oder nur geringer Beladung fahrenden Fahrzeug mit nicht idealer Achslastverteilung aktiviert sich aufgrund entsprechender Schlupfwerte sehr häufig die Antiblockierfunktion und verändert den Bremsdruck wenigstens an der zum Blockieren neigenden Radbremse.

Die erfindungsgemäße Ermittlung von Bremsverteilungsindices und die Gewichtung der Steuersignale für die Drucksteuerventile der betreffenden Räder oder Achsen mit diesen Bremsverteilungsindices im Drucksteuermodus verbessern die Achsverteilungsverhältnisse in Richtung des idealen Zustands und beugt einem unerwünschten Eingreifen der Antiblockierfunktion vor. Ein unerwünschtes Eingreifen der Antiblockierfunktion wird solange ausgeschlossen oder erfolgt so spät, wie es aufgrund der gegebenen physikalischen Bedingungen tatsächlich möglich ist. Es blockieren sämtliche Räder des Fahrzeugs gleichzeitig oder nahezu gleichzeitig.

Gemäß der Erfindung wird zur Bestimmung des Bremsverteilungsindex eine Veränderung des aktuellen Differenzschlupfwerts eines Achsenpaars gegenüber einem Kennwert des Differenzschlupfs zum Startzeitpunkt eines ersten Bewertungsintervalls ermittelt. Der Bremsverteilungsindex wird quantitativ entsprechend der intervallbezogenen Veränderung des aktuellen Differenzschlupfwerts bestimmt. Der Bremsverteilungsindex beschreibt dabei das Verhältnis der Veränderung des Differenzschlupfwerts im betrachteten Bewertungsintervall, das heißt während des durch das Bewertungsintervall definierten Zeitraums. Anders ausgedrückt ist der Bremsverteilungsindex ein Differenzenquotient der Veränderung des Differenzschlupfwerts zur Veränderung der Zeit, das heißt dem durch das Bewertungsintervall begrenzten Zeitraums, was sich geometrisch durch die Steigung einer die Differenzschlupfwerte zum Startzeitpunkt und Endzeitpunkt des Bewertungsintervalls erfassenden Geraden beschreiben lässt. In einer vorteilhaften praktischen Umsetzung des Verfahrens wird fortlaufend die Steigung ermittelt und mit der Steigung ein entsprechender Bremsverteilungsindex verknüpft. Die Schlupfwerte der Räder oder Achsen des betrachten Achsenpaars werden anhand von Messsignalen von Drehzahlsensoren der jeweiligen Räder bestimmt.

Bei der Bestimmung des Bremsverteilungsindex in quantitativer Entsprechung der zeitbezogenen Veränderung des aktuellen Differenzschlupfwerts wird als Startpunkt des Bewertungsintervalls derjenige Zeitpunkt erfasst, zu dem der aktuelle Bremsdruck in den Radbremsen einen vorgegebenen Schwellwert des Bremsdrucks überschreitet. Auf diese Weise werden repräsentative Bremsverteilungsindices unter Berücksichtigung der an den Radbremsen des betreffenden Achsenpaars ermittelten Schlupfwerte und daraus hergeleiteten Differenzschlupfwerte für den Drucksteuermodus bereitgestellt. Vorteilhaft wird dabei der Ansprechdruck der Radbremsen als Schwellwert zur Erfassung des Startzeitpunkts des ersten Bewertungsintervalls berücksichtigt. Der Ansprechdruck der Radbremsen ist dabei derjenige Wert des Bremsdrucks an den Radbremsen, bei der die Radbremsen ansprechen und die beweglichen Aktoren der Radbremsen tätig werden. Der Ansprechdruck der Radbremsen wird vorteilhaft im Voraus ermittelt und der Bremssteuereinheit vorgegeben.

In einer vorteilhaften Ausführungsform der Erfindung wird der Bremsverteilungsindex in einem zweiten Bewertungsintervall entsprechend einer Veränderung der Fahrerbremsanforderung zwischen der Fahrerbremsanforderung zum Startzeitpunkt des zweiten Bewertungsintervalls und der Fahrerbremsanforderung zu einem Endzeitpunkt des zweiten Bewertungsintervalls ermittelt. Dabei wird der Endzeitpunkt des Bewertungsintervalls bei Vorliegen eines Differenzschlupfwerts gleich einem vorgegebenen oder ermittelten Offsetwert des Differenzschlupfs angenommen. Während des Bewertungsintervalls wird laufend der Differenzschlupfwert des betrachteten Achsenpaars ermittelt und dessen Veränderung innerhalb des Bewertungsintervalls derart bewertet, dass bei Erreichen des Offsetwerts die Bewertung beendet wird. Vorteilhaft wird als Offsetwert der Differenzschlupfwert zum Zeitpunkt des Erreichens des Ansprechdrucks der Radbremsen ermittelt. Der Ansprechdruck ist dabei derjenige Wert des auf die Radbremsen wirkenden Bremsdrucks, bei dem die Radbremsen beginnen, mit einer Bremskraft anzusprechen.

Die Ermittlung des Bremsverteilungsindex im zweiten Bewertungsintervall, das heißt auf der Grundlage der Veränderung der Fahrerbremsanforderung während des Bewertungsintervalls, wobei die Dauer des Bewertungsintervalls von der Veränderung des Differenzschlupfwerts abhängt und bestimmt ist, ist besonders vorteilhaft bei Bremsanlagen, deren Bremssteuereinheit eine elektronische Bremskraftverteilung verwirklicht. Diese Vorgehensweise der Ermittlung von Bremsverteilungsindices wird bevorzugt verwendet, nachdem die Bremskraftverteilung aktiviert ist.

Bei einer elektronischen Bremskraftverteilung (EBV) wird der Differenzschlupf zwischen den Vorderrädern und den Hinterrädern beziehungsweise der Vorderachse und einer oder mehrerer Hinterachsen betrachtet. Überschreitet der Differenzschlupf einen vorgegebenen Stabilitätsgrenzwert, so verhindert die Bremskraftverteilungsfunktion der Bremssteuereinheit einen weiteren Druckanstieg in den Bremszylindern der Hinterachse. Dies erfolgt durch entsprechende Modifizierung der Steuersignale für die Drucksteuerventile der Hinterachse, insbesondere eines Druckeinlassventils. Im übertragenen Sinn sperrt die Bremssteuereinheit bei Aktivierung der elektronischen Bremskraftverteilung den aktuellen Bremsdruck an der Hinterachse ein. Der Bremsdruck wird durch den der Bremskraftverteilungsfunktion vorgegebenen Stabilitäts-Grenzwert begrenzt. Bei der Ermittlung des Bremsverteilungsindex unter Berücksichtigung des Aktivitätsstatus der elektronischen Bremskraftverteilung wird als Startzeitpunkt des Bewertungsintervalls der Zeitpunkt der Aktivierung der elektronischen Bremskraftverteilung und der damit einhergehenden Begrenzung des Bremsdrucks an der Hinterachse angenommen.

Der Kennwert des Differenzschlupfs, welcher zur Bestimmung des Endzeitpunkts des zweiten Bewertungsintervalls für die Ermittlung des Bremsverteilungsindex auf der Grundlage der Veränderung der Fahrerbremsanforderung herangezogen wird, wird vorteilhaft an das Vorliegen eines bestimmten und bei jeder Bremsung wiederkehrenden Situation des Bremsvorgangs geknüpft. Vorzugsweise entspricht der Kennwert, welcher auch als Offset-Wert bezeichnet werden kann, dem Differenzschlupfwert zu dem Zeitpunkt, wo die Fahrerbremsanforderung beziehungsweise die mit der Fahrerbremsanforderung einhergehende Erhöhung des Bremsdrucks erstmalig detektiert ist. Wird der vorgegebene Schlupfschwellwert, welcher dem erfassten Offset-Wert des Differenzschlupfs entspricht, während des zweiten Bewertungsintervalls nicht erreicht, so wird die Fahrerbremsanforderung zum Endzeitpunkt des zweiten Bewertungsintervalls durch Extrapolation ermittelt. Dabei wird die Fahrerbremsanforderung zum Zeitpunkt der Aktivierung der elektronischen Bremskraftverteilung und der höchste im zweiten Bewertungsintervall erfasste Wert der Fahrerbremsanforderung berücksichtigt und in Richtung des voraussichtlichen Endzeitpunkts interpoliert. Anders ausgedrückt werden die Fahrerbremsanforderung zum Zeitpunkt der Aktivierung der elektronischen Bremskraftverteilung und der höchste im zweiten Bewertungsintervall erfasste Wert der Fahrerbremsanforderung als Stützstellen zur Ermittlung eines Interpolationspolynoms herangezogen und dann der Wert des Interpolationspolynoms bei dem voraussichtlichen Endzeitpunkt bestimmt.

In einer vorteilhaften Ausführungsform der Erfindung werden zwischenachsige Bremsverteilungsindices für mehrere Räder oder Achsenpaare mit einer in allen Achsenpaaren berücksichtigen Referenzachse ermittelt. Die in allen Achsenpaaren berücksichtigte Differenzachse ist vorzugsweise die Vorderachse.

Die Erfindung ist insbesondere bei Fahrzeugen vorteilhaft, welche mit pneumatisch betätigbaren Radbremsen ausgestattet sind. Das Fahrzeug ist dabei vorteilhaft ein Kraftfahrzeug, also ein solches Fahrzeug, welches mit Motorkraft angetrieben wird, oder ein Anhängefahrzeug für Kraftfahrzeuge. Verwendet wird die Erfindung bevorzugt bei Nutzfahrzeugen und Fahrzeugkombinationen mit einem Kraftfahrzeug, welches in der Fahrzeugkombination als Zugfahrzeug bezeichnet wird, und einem oder mehreren Anhängefahrzeugen. Unter einem Nutzfahrzeug wird ein solches Kraftfahrzeug verstanden, das nach seiner Bauart und Einrichtung zum Transport von Personen oder Gütern oder zum Ziehen von Anhängefahrzeugen bestimmt ist.

Ein Anhängefahrzeug weist in der Regel seinerseits ein eigenes Fahrerassistenzsystem auf, das der Bremssteuereinheit des Zugsfahrzeugs externe Bremsanforderungen vorgibt. Bei einer Fahrzeugkombination, bei der zwischen den Teilfahrzeugen eine Datenübertragung stattfindet, beispielsweise über eine CAN-Schnittstelle, erfolgt die Ermittlung des Bremsverteilungsindex für die beziehungsweise auch mehrerer Achsen des Anhängefahrzeugs über die Bremssteuereinheit des Zugfahrzeugs. Dabei wird über die CAN-Schnittstelle zumindest ein Raddrehzahlsignal, zum Beispiel eine Radgeschwindigkeit zumindest eines Rades des Anhängefahrzeugs, zur Bremssteuereinheit des Zugfahrzeugs übertragen. Die Bremssteuereinheit des Zugfahrzeugs ermittelt den Bremsdruck für die Radbremsen des Anhängefahrzeugs und bestimmt Bremsverteilungsindices für die Achsen des Anhängefahrzeugs. Dabei wird der zwischenachsige Bremsverteilungsindex von Achsenpaaren bestimmt, bei denen eine Achse des Anhängefahrzeugs und eine Referenzachse, das heißt vorzugsweise die Vorderachse des Zugsfahrzeugs, betrachtet und bezüglich des zwischenachsigen Differenzschlupfs bewertet werden.

Ausführungsbeispiele der Erfindung sind nachstehend anhand der Zeichnung näher erläutert. Es zeigen:
- Fig. 1: ein pneumatisches und elektrisches Schema einer Bremsanlage eines Nutzfahrzeugs mit Anhängefahrzeug,
- Fig. 2: ein Flussschaubild eines Ausführungsbeispiels eines Verfahrens zum Einstellen der Bremsdrücke in einer Bremsanlage gemäß Fig. 1,
- Fig. 3: eine grafische Darstellung von Größenverläufen bei der Durchführung eines Ausführungsbeispiels des Verfahrens gemäß Fig. 2.

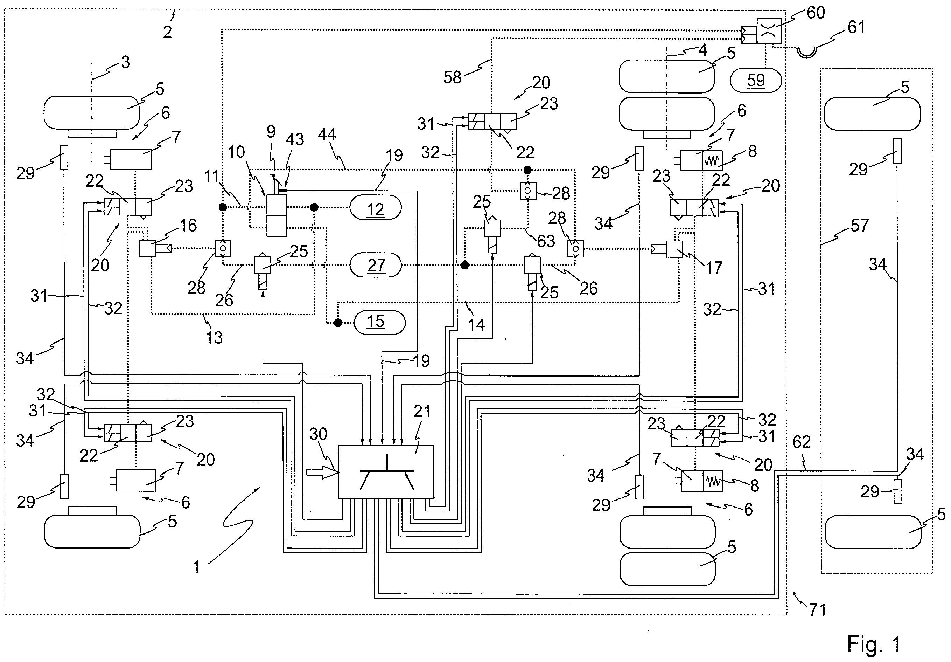

Fig. 1 zeigt einen elektrisch-pneumatischen Plan einer Bremsanlage 1 eines Fahrzeugs 2, nämlich eines als Nutzfahrzeugs ausgebildeten Kraftfahrzeugs 71, welches im Ausführungsbeispiel mit einem Anhängefahrzeug 57 kombiniert ist. Elektrische Leitungen sind mit Volllinien und pneumatische Leitungen mit punktierten Linien dargestellt. Das Fahrzeug 2 umfasst im gezeigten Ausführungsbeispiel zwei Achsen, nämlich eine Vorderachse 3 und eine Hinterachse 4, an denen jeweils beidseitig Räder 5 angeordnet sind. Zum Abbremsen der Räder 5 ist jedem Rad 5 eine Radbremse 6 zugeordnet. Die Radbremsen 6 sind pneumatisch betätigbar und weisen jeweils einen Bremszylinder 7 auf. Die Radbremsen 6 üben entsprechend dem jeweils im Bremszylinder 7 anliegenden pneumatischen Bremsdruck eine Bremskraft auf das drehende Rad 5 aus. An den Rädern 5 der Hinterachse 4 sind dabei Bremszylinder 7 mit Federspeichern 8 vorgesehen, welche einer Feststellbremse dienen.

In der Fahrerkabine des Fahrzeugs 2 ist ein Bremspedal 9 angeordnet, welches an ein Betriebsbremsventil 10 gekoppelt ist. Der Fahrer des Fahrzeugs 2 kann durch Betätigen des Bremspedals 9 pneumatischen Druck zu den Bremszylindern 7 durchschalten und somit die Radbremsen 6 betätigen. Hierzu beherrscht das Betriebsbremsventil 10 pneumatische Bremsleitungen 11, 44 zwischen den Druckmittelvorräten 12, 15 und den Bremszylindern 7.

Im gezeigten Ausführungsbeispiel sind die Radbremsen 6 der Vorderachse 3 einem gemeinsamen ersten Bremskreis 13 zugeordnet, während die Radbremsen 6 der Hinterachse 4 über einen zweiten Bremskreis 14 betätigbar sind. Der erste Druckmittelvorrat 12 ist dabei dem ersten Bremskreis 13 zugeordnet und über die Bremsleitung 11 an die Bremszylinder 7 der Vorderachse 3 angeschlossen. Der zweite Bremskreis 14 der Hinterachse 4 wird über einen zweiten Druckmittelvorrat 15 mit Druckmittel versorgt. Der zweite Bremskreis 14 ist analog dem ersten Bremskreis 13 aufgebaut, das heißt, dass die Bremsleitung 44 zwischen dem zweiten Druckmittelvorrat 15 zu den Radbremsen 6 der Hinterachse 4 über das Betriebsbremsventil 10 freigebbar ist und daher der Bremsdruck in Abhängigkeit von der Stellung des Bremspedals 9 einstellbar ist.

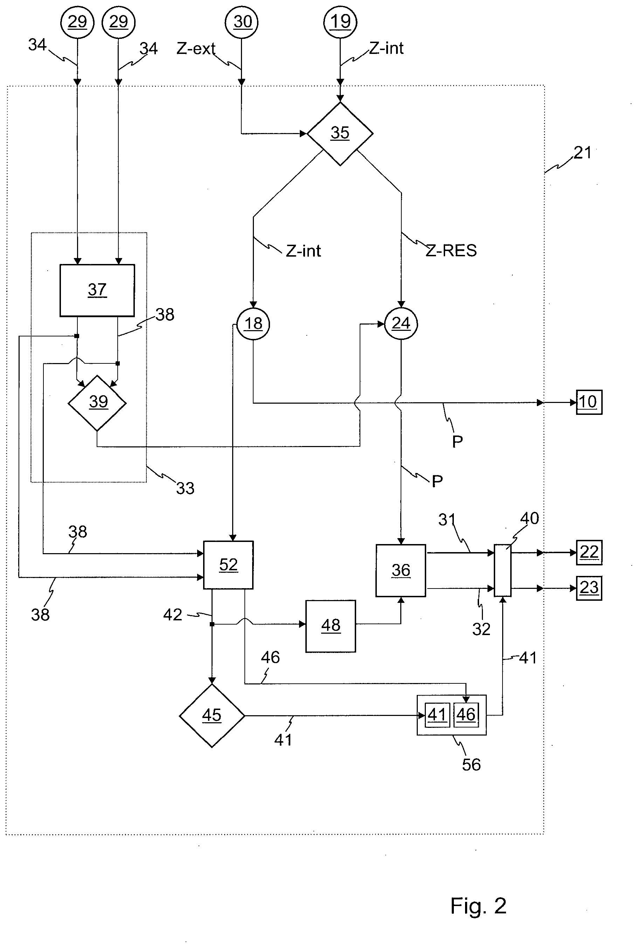

Im ersten Bremskreis 13 ist ein pneumatisch betätigbares Relaisventil 16 und analog im zweiten Bremskreis 14 ein Relaisventil 17 angeordnet. Die pneumatisch betätigbaren Relaisventile 16, 17 werden über den pneumatischen Druck aus dem jeweils angeschlossenen Druckmittelvorrat 12, 15 geöffnet. Wird das Betriebsbremsventil 10 geöffnet, schalten die Relaisventile 16, 17 anstehenden Bremsdruck zu den angeschlossenen Radbremsen 6 durch. In einem Normalbremsmodus (Bezugszeichen 18 in Fig. 2) ist der Bremsdruck in den Radbremsen 6 in Abhängigkeit der Fahrerbremsanforderung (Bezugszeichen 19 in Fig. 2) einstellbar. Im Normalbremsmodus 18 hat daher der Fahrer des Fahrzeugs 2 über die Betätigung des Bremspedals 9 die volle Kontrolle über das Bremsverhalten des Fahrzeugs 2.

Jeder Radbremse 6 der Bremsanlage 1 ist ein Drucksteuerventil 20 zugeordnet, welche von einer Bremssteuereinheit 21 in einem Drucksteuermodus (Bezugszeichen 24 in Fig. 2) elektrisch angesteuert werden und zum Empfang von Steuersignalen 31, 32 mit der Bremssteuereinheit 21 signalübertragend verbunden sind. Die Drucksteuerventile 20 der Radbremsen 6 der Vorderachse 3 sind im ersten Bremskreis 13 und die Drucksteuerventile 20 der Hinterachse 4 im zweiten Bremskreis 14 angeordnet. Die Drucksteuerventile 20 sind jeweils eine Kombination von wenigstens zwei Magnetventilen, nämlich einem Einlassventil 22 und einem Auslassventil 23. Das Einlassventil 22 dient dabei prinzipiell zur Druckerhöhung beziehungsweise zum Halten des Drucks im Bremszylinder 7, während das Auslassventil 23 zur Reduzierung des Bremsdrucks geöffnet wird und den jeweils angeschlossenen Bremszylinder 7 entlüftet. Das Einlassventil 22 und das Auslassventil 23 sind im Ausführungsbeispiel 2/2-WegeVentile.

Die Bremssteuereinheit 21 ist dazu ausgebildet und konfiguriert, unabhängig von der Fahrerbremsanforderung 19 selbsttätig im Drucksteuermodus 24 auf den Bremsvorgang einzuwirken. Hierzu ermittelt die Bremssteuereinheit 21 auf der Grundlage der ihr zugeführten Informationen Steuersignale 31, 32 für die Drucksteuerventile 20, um das Bremsverhalten der einzelnen Radbremsen 6 einzustellen. Die Bremssteuereinheit 21 ermittelt dabei Steuersignale 31 für die Einlassventile 22 und Steuersignale 32 für die Auslassventile 23 und steuert die jeweiligen Ventile mit den ermittelten Steuersignalen 31, 32 an. Die Einlassventile 22 und die Auslassventile 23 werden pulsmoduliert gesteuert. Die Steuersignale 31, 32 entsprechen daher einem bestimmten Pulsmuster, welches die Bremssteuereinheit 21 zur Einstellung eines jeweiligen Bremsdrucks P vorgibt.

Im Normalbremsmodus 18 sind die Einlassventile 22 in die geöffnete und die Auslassventile 23 in die geschlossene Stellung geschaltet, so dass die Einstellung des Bremsdrucks P nicht beeinflusst wird.

Im Drucksteuermodus 24 übernimmt die Bremssteuereinheit 21 die Einstellung des Bremsdrucks der jeweiligen Radbremsen 6 durch entsprechende Ansteuerung der Drucksteuerventile 20. Jedem Bremskreis 13, 14 ist ein elektrisch betätigbares Aktivierungsventil 25 zugeordnet, welche von der Bremssteuereinheit 21 betätigbar sind. Jedes Aktivierungsventil 25 ist als 3/2-Wege-Ventil ausgebildet, wodurch die Druckleitung hinter dem Aktivierungsventil bedarfsweise entlüftet werden kann. Im Drucksteuerbetrieb 24 wird durch Ansteuerung der Aktivierungsventile 25 Bremsdruck zu den Drucksteuerventilen 20 durchgeschaltet. Im gezeigten Ausführungsbeispiel beherrschen die Aktivierungsventile 25 jeweils eine Druckleitung 26 von einem dritten Druckmittelspeicher 27 zu den Relaisventilen 16, 17. Durch Betätigung des Aktivierungsventils 25 des ersten Bremskreises 13 kann somit das Relaisventil 16 der Vorderachse 3 betätigt werden. Analog wird das Relaisventil 17 der Hinterachse 4 durch Betätigung des Aktivierungsventils 25 des zweiten Bremskreises 14 betätigt.

Das Betriebsbremsventil 10 und die Aktivierungsventile 25 sind jeweils über ein Doppelrückschlagventil 28 auf den pneumatischen Steuereingang des Relaisventils 16, 17 des jeweiligen Bremskreises 13, 14 gekoppelt.

Die Bremsanlage 1 umfasst ein Antiblockiersystem, wobei die Bremssteuereinheit 21 die Antiblockierfunktion (Bezugszeichen 33 in Fig. 2) im Drucksteuermodus 24 umsetzt. Wesentliche Bestandteile zur Umsetzung der Antiblockierfunktion 33 sind neben der Bremssteuereinheit 21 die Drucksteuerventile 20 der Radbremsen 6 als Aktoren des Antiblockiersystems sowie Drehzahlsensoren 29, deren Messsignale 34 die Bremssteuereinheit 21 zur Ermittlung der Blockierneigung der Räder 5 heranzieht. Die Bremssteuereinheit 21 ermittelt aus den Messsignalen 34 der Drehzahlsensoren 29 Informationen über dynamische Zustandsgrößen der jeweiligen Räder 5, insbesondere den jeweiligen Schlupf (Bezugszeichen 38 in Fig. 2), um daraus auf eine Blockierneigung des betreffenden Rades 5 zu schließen. Bei Feststellen einer Blockierneigung eines oder mehrerer Räder 5 greift die Bremssteuereinheit 21, welche die Antiblockierfunktion 33 realisiert, im Drucksteuermodus 24 durch Steuerung des Bremsdrucks P an der betreffenden Radbremse 6 in den Bremsvorgang ein.

Durch Einstellung der Bremsdrücke im Drucksteuermodus 24 setzt die Bremssteuereinheit 21 nicht nur interne Bremsanforderungen um, welche auf der Grundlage der ihr zugeführten dynamischen Zustandsgrößen des Fahrzeugs vorgegeben sind, sondern auch externe Bremsanforderungen 30. Die externe Bremsanforderung 30 wird von einem Fahrerassistenzsystem vorgegeben. Unter einer externen Bremsanforderung 30 ist dabei die Anforderung von Bremsleistung durch ein oder mehrere Fahrerassistenzsysteme oder andere externe Systeme zu verstehen, welche aufgrund ihrer Funktion im Fahrzeug 2 ein Bremsmanöver anfordern. Bei Empfang einer externen Bremsanforderung 30 schaltet die Bremssteuereinheit 21 vom Normalbremsmodus 18 in den Drucksteuermodus 24 und übernimmt die Steuerung beziehungsweise Regelung der Bremsdrücke P an den einzelnen Rädern 5.

Wird die externe Bremsanforderung 30 zurückgenommen, das heißt, dass die Bremssteuereinheit 21 keine externe Bremsanforderung 30 mehr empfängt, so leitet die Bremssteuereinheit 21 in der Regel eine Beendigung des Drucksteuermodus 24 ein, sofern keine weitere Bremsanforderung vorliegt. Mit der Beendigung des Drucksteuermodus 24 erhält der Fahrer des Fahrzeugs 2 somit wieder die volle Kontrolle über die Betätigung der Radbremsen 6 im Normalbremsmodus 18.

Die Bremsanlage 1 umfasst einen Bremssignalgeber 43, welcher signalübertragend mit der Bremssteuereinheit 21 verbunden ist. Das Ausgangssignal des Bremssignalgebers 43 entspricht quantitativ der Fahrerbremsanforderung 19, wobei beispielsweise die Stellung oder ein Betätigungsweg des Bremspedals 9, ein Betätigungsweg eines Bauteils des Betriebsbremsventils 10 oder ein vom Betriebsbremsventil 10 ausgesteuerter Bremsdruck gemessen werden kann. Über die signalübertragende Verbindung wird der Bremssteuereinheit 21 die Fahrerbremsanforderung 19 mitgeteilt. Auf diese Weise ist die Bremssteuereinheit 21 in der Lage, im Drucksteuermodus 24 ein Hinzubremsen des Fahrers, das heißt eine zusätzliche und gleichzeitig zur externen Bremsanforderung 30 auftretende Fahrerbremsanforderung 19 zu berücksichtigen. Das Ausgangssignal des Bremssignalgebers 43 vermittelt der Bremssteuereinheit 21 im Drucksteuermodus 24 quantitative Informationen über die Fahrerbremsanforderung 19. Im Ausführungsbeispiel gemäß Fig. 2 wird der Bremssteuereinheit 21 eine vom Fahrer gewünschte interne Sollverzögerung Z-int vorgegeben, anhand welcher die Bremssteuereinheit 21 den entsprechenden Bremsdruck P ermittelt und einstellt.

Das Kraftfahrzeug 2 ist das Zugfahrzeug eines Fahrzeuggespanns, bei dem an das Kraftfahrzeug 2 ein Anhängefahrzeug 57 beziehungsweise dessen Bremssystem angeschlossen ist. Über einen im Ausführungsbeispiel als CAN-Schnittstelle 62 ausgebildete Kommunikationsverbindung ist die Bremssteuereinheit 21 des Kraftfahrzeugs 2 signalübertragend mit dem Bremssystem des Anhängefahrzeugs 57 verbunden und erfasst in dem Ausführungsbeispiel die Messsignale 34 der Drehzahlsensoren 29 an den Rädern 5 des Anhängefahrzeugs 57. Die Bremssteuereinheit 21 des Zugfahrzeugs erfasst dabei unmittelbar die Messsignale 34 der Drehzahlsensoren 29 von Rädern 5 des Anhängefahrzeugs 57.

In weiteren Ausführungsbeispielen weist das Anhängefahrzeug 57 eine eigene Steuereinheit zusätzlich zur Bremssteuereinheit des Zugfahrzeugs auf. Über die CAN-Schnittstelle 62 zwischen Anhängefahrzeug 57 und Kraftfahrzeug 2 überträgt die in Fig. 1 nicht gezeigte Steuereinheit des Anhängefahrzeugs 57 zum Zugfahrzeug hin ein Geschwindigkeitssignal, beispielsweise die Anhängefahrzeug-Referenzgeschwindigkeit, welche von einer Steuereinheit des Anhängefahrzeugs 57 auf Grundlage aller vorhandenen Messsignale 34 von Drehzahlsensoren 29 des Anhängerfahrzeugs 57 ermittelt wurde. Alternativ wird eine Anhängefahrzeug-Achsgeschwindigkeit ermittelt und zur Bremssteuereinheit 21 übertragen, welche die Geschwindigkeit der Räder einer bestimmten, ausgewählten Achse des Anhängefahrzeugs 57 ist. Anders ausgedrückt wird diese Achsgeschwindigkeit auf der Grundlage der Messsignale 34 der Drehzahlsensoren 29 der betreffenden Achse des Anhängefahrzeugs 57 ermittelt. Die betreffende Achse des Anhängefahrzeugs 57 ist dabei eine solche Achse des Anhängefahrzeugs 57, die repräsentativ für die Verzögerungswirkung des Anhängefahrzeugs 57 ist. Bei einem Drehschemelanhängefahrzeug ist dies vorteilhaft die Vorderachse oder bei einem dreiachsigen Sattelauflieger die mittlere der drei Achsen.

Zur Aktivierung des Bremssystems des Anhängefahrzeugs 57 ist ein dritter Bremskreis 63 mit einem vierten Druckvorrat 59 eingerichtet. Der dritte Bremskreis 63 weist ähnlich dem ersten Bremskreis 13 und dem zweiten Bremskreis 14 ein Drucksteuerventil 20, ein Doppelrückschlagventil 28 und ein 3/2-Wegeventil 25 auf. Das Drucksteuerventil 20 des dritten Bremskreises 63 beziehungsweise dessen Einlassventil 22 und Auslassventil 23 ist von der Steuereinheit 21 steuerbar. Im Unterschied zu dem ersten Bremskreis 13 und dem zweiten Bremskreis 14 ist eine Bremsdruckleitung 58 hinter dem Drucksteuerventil 20 mit einem Kontrollventil 60 verbunden, welches die Verbindung zwischen dem vierten Druckvorrat 59 und einem pneumatischen Kupplungskopf 61 beherrscht. An den Kupplungskopf 61 ist das Bremssystem des Anhängefahrzeugs 57 ankuppelbar. Das Bremssystem des Anhängefahrzeugs 57 ist im gezeigten Ausführungsbeispiel über die Vorsteuerung des Kontrollventils 60 aus einem vierten Druckvorrat 59 gespeist.

Die Bremssteuereinheit 21 des Zugfahrzeugs ermittelt Bremsdrücke für das Anhängefahrzeug 57 und steuert die Drucksteuerventile der Radbremsen des Anhängefahrzeugs 57 über Steuersignale 31, 32 entsprechend den Radbremsen 6 des Kraftfahrzeugs 2.

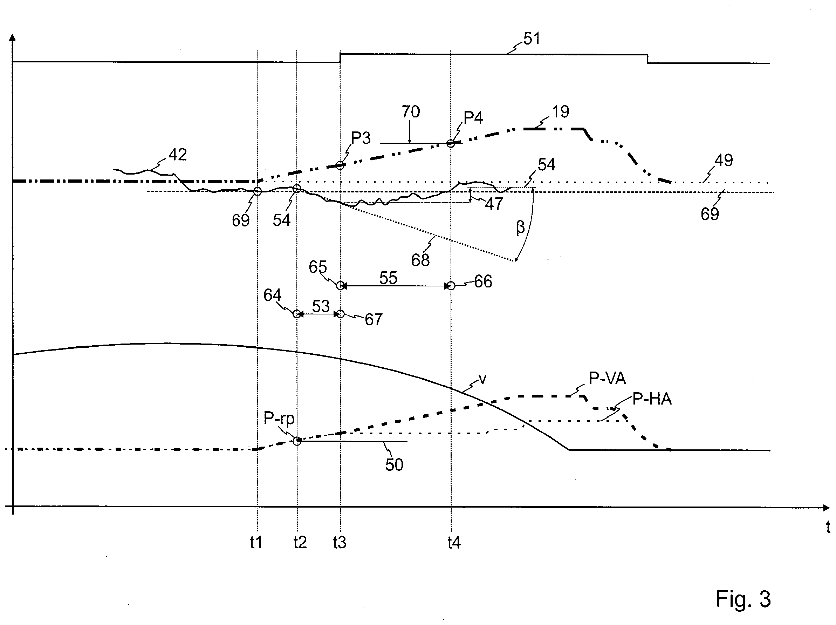

Die Bremssteuereinheit 21 berücksichtigt sowohl die Fahrerbremsanforderung 19 als auch die externe Bremsanforderung 30 in einem Verfahren zur Einstellung des Bremsdrucks P an den Radbremsen 6, welches nachstehend anhand von Fig. 2 und 3 beschrieben ist.

Im Normalbremsmodus 18 wird der Bremsdruck P allein in Abhängigkeit der Fahrerbremsanforderung 19 eingestellt. Die Fahrerbremsanforderung 19 wird der Bremssteuereinheit 21 (Fig. 1) durch einen die Fahrerbremsanforderung 19 repräsentierenden Größenwert vorgegeben. Im gezeigten Ausführungsbeispiel wird der Größenwert als interner Sollverzögerungswert Z-int vorgegeben. Wird die Fahrerbremsanforderung in einer anderen physikalischen Größe als die externe Bremsanforderung 30 eingegeben, so rechnet die Bremssteuereinheit 21 den Wert dieser Größen in einen quantitativ entsprechenden Sollverzögerungswert um, so dass interne und externe Bremsanforderungen in der gleichen physikalischen Dimension vorliegen und leicht verknüpfbar sind.

Im Normalbremsmodus 18 stellt die Bremsanlage 1 (Fig. 1) den Bremsdruck P über Betätigung des Betriebsbremsventils 10 ein. Empfängt die Bremssteuereinheit 21 eine externe Bremsanforderung 30, so übernimmt die Bremssteuereinheit 21 die Einstellung des Bremsdrucks im Drucksteuermodus 24. Die Bremssteuereinheit 21 berücksichtigt in einer Moduserfassung 35 zur Entscheidung zwischen den Bremsmodi die zu berücksichtigenden Bremsanforderungen, nämlich die Fahrerbremsanforderung 19 und die externe Bremsanforderung 30. Liegt keine externe Bremsanforderung 30 vor, so wird der Bremsdruck P an den Radbremsen entsprechend der Fahrerbremsanforderung 19 im Normalbremsmodus 18 eingestellt. Im Normalbremsmodus 18 bleiben die Einlassventile 22 der Drucksteuerventile 20 geöffnet und die Auslassventile 23 geschlossen, wodurch der Fahrer des Fahrzeugs 2 die volle Kontrolle über das Bremsmanöver hat.

Empfängt die Bremssteuereinheit 21 eine externe Bremsanforderung 30, so stellt die Bremssteuereinheit 21 im Drucksteuermodus 24 an den Radbremsen 6 einen Bremsdruck P unter Berücksichtigung der externen Bremsanforderung 30 und einer gegebenenfalls gleichzeitigen Fahrerbremsanforderung 19 ein. Liegen sowohl externe Bremsanforderung 30 als auch eine Fahrerbremsanforderung 19 vor, beispielsweise wenn der Fahrer während des Drucksteuermodus 24 hinzubremst, so ermittelt die Bremssteuereinheit den einzustellenden Bremsdruck P unter Verknüpfung der Fahrerbremsanforderung 19 und der externen Bremsanforderung 30 zu einer resultierenden Bremsanforderung.

Die externe Bremsanforderung 30 wird der Bremssteuereinheit 21 als externer Sollverzögerungswert Z-ext vorgegeben. Der interne Verzögerungswert Z-int wird mit dem externen Verzögerungswert Z-ext zu einem resultierenden Verzögerungswert Z-RES verknüpft, im Ausführungsbeispiel addiert.

Nach Erfassung der Bremsanforderungen, also entweder eine ausschließlich externe Bremsanforderung 30 mit einem Sollverzögerungswert Z-ext oder eine resultierende Bremsanforderung aus Fahrerbremsanforderung 19 und externer Bremsanforderung 30, erfolgt eine Ermittlung 36 der Steuersignale 31, 32 für Einlassventile 22 beziehungsweise Auslassventile 23, um den Bremsdruck P entsprechend der Vorgabe durch die Bremssteuereinheit 21 einzustellen.

Die Bremssteuereinheit 21 wertet zur Umsetzung der Antiblockierfunktion 33 die Messsignale 34 der Drehzahlsensoren 29 aus, wobei anhand der Messsignale 34 eine Schlupfbestimmung 37 erfolgt. Bei der Schlupfbestimmung 37 werden für jedes Rad 5 des Fahrzeugs 2 der jeweilige Schlupf 38 bestimmt. Eine Aktivierung 39 schaltet in den Drucksteuermodus 24, wenn der ermittelte Schlupf 38 eine vorgegebene Schlupfgrenze überschreitet. Die Schlupfgrenze repräsentiert dabei den Zustand des betreffenden Rades, bei dem das Rad zum Blockieren neigt. Bei einer Aktivierung 39 der Antiblockierfunktion 33 werden im Drucksteuermodus 24 Steuersignale 31, 32 für die Einlassventile 22 beziehungsweise die Auslassventile 23 erzeugt und der Bremsdruck P an dem zum Blockieren neigenden Rad 5 entlang der Schlupfgrenze geregelt.

Die Bremssteuereinheit 21 ermittelt im Normalbremsmodus 18 durch Bewertung 45 der Veränderung eines Differenzschlupfwerts 42 zwischenachsige Bremsverteilungsindices 41 für die betreffenden Achsenpaare 46. Die im Normalbremsmodus 18 ermittelten Bremsverteilungsindices 41 werden in einem Speicherelement 56 abgelegt und für eine spätere Berücksichtigung im Drucksteuermodus 24 bereitgehalten. Im Drucksteuermodus 24 zieht die Bremssteuereinheit 21 den zwischenachsigen Bremsverteilungsindex 41 zur Gewichtung 40 der Steuersignale 31, 32 für die Einlassventile 22 beziehungsweise die Auslassventile 23 des jeweiligen Achsenpaars 46 heran.

Für die Ermittlung des Bremsverteilungsindex 41 bestimmt die Bremssteuereinheit 21 laufend Differenzschlupfwerte, welche jeweils der Differenz des Schlupfs 38 zweier Achsen 3, 4 des Kraftfahrzeugs entsprechen. Bei der Ermittlung der Differenzschlupfwerte 42 werden entweder unmittelbar sämtliche Schlüpfe der Räder oder alle Achsschlüpfe berücksichtigt, die den Mittelwert der Radschlüpfe des linken und rechten Rades einer Achse darstellen. Die Informationen zum jeweiligen Schlupf 38 werden von der Antiblockierfunktion 33 bereitgestellt, welche die Messsignale 34 der Drehzahlsensoren 29 ständig auswertet. Während des Normalbremsmodus 18 werden somit für jedes Achsenpaar 46 Bremsverteilungsindices 41 gelernt und im Drucksteuermodus 24 für die Gewichtung 40 herangezogen.

Der Bremsverteilungsindex 41 ist ein Gewichtungsfaktor, welcher im Drucksteuermodus 24 bewirkt, dass bereits ab Beginn einer Bremsung aufgrund externer Bremsanforderung 30 gleiche oder im Wesentlichen gleiche Schlupfverhältnisse an allen Achsen herrschen und somit das Bremsverhalten sicherer wird.

Die Bremssteuereinheit 21 setzt außer der Antiblockierfunktion 33 auch eine elektronische Bremskraftverteilung 48 um. Hierzu zieht die Bremssteuereinheit 21 den Differenzschlupfwert 42 heran und begrenzt bei Überschreiten eines vorgegebenen Stabilitäts-Grenzwerts den einzusteuernden Bremsdruck an den Radbremsen der Hinterachse des Kraftfahrzeugs. Hierzu werden insbesondere die Steuersignale 31 für die jeweiligen Einlassventile 22 von der elektronischen Bremskraftverteilung 48 angepasst und ein weiterer Druckanstieg des Bremsdrucks im jeweiligen Bremszylinder der Radbremse verhindert.

Die Ermittlung des Bremsleistungsindex 41 wird nachstehend anhand der grafischen Verläufe maßgeblicher Größen anhand von Fig. 3 erläutert. Auf der Ordinatenachse ist dabei die quantitative Größe in Abhängigkeit der Zeit t auf der Abszissenachse dargestellt. Gezeigt ist dabei der zeitliche Verlauf der jeweiligen Größen während eines Bremsvorgangs des Kraftfahrzeugs 2, wobei aufgrund der Bremswirkung die Fahrzeuggeschwindigkeit v bis zum Stillstand abnimmt. Die Bremsung wird eingeleitet durch eine Fahrerbremsanforderung 19, welche ab dem Zeitpunkt t1 auftritt, so dass sich der grafische Verlauf der Fahrerbremsanforderung 19 von der Nulllinie 49 abhebt. Bewegt sich der Differenzschlupfwert 42 oberhalb der Nulllinie 49, so ist dem die Information entnehmbar, dass die Hinterachse des Kraftfahrzeugs relativ zur Vorderachse schneller dreht. Das ist dann der Fall, wenn die Hinterachse während einer Antriebsphase des Kraftfahrzeugs wirksam vom Antriebsmotor angetrieben wird oder während einer Bremsphase in Bezug zur Vorderachse relativ unterbremst ist. Andersherum ist bei einem Differenzschlupfwert 42 unterhalb der Nulllinie 49 davon auszugehen, dass die Hinterachse relativ langsamer dreht. Das ist entweder dann der Fall, wenn ein Antriebsmotor auf die Hinterachse gekuppelt ist, aber die Hinterachse nicht antreibt, so das ein Motorreibmoment eine Verzögerungswirkung auf die Hinterachse ausübt und gleichzeitig noch nicht von der Bremsanlage gebremst ist. Oder aber die Hinterachse ist während einer Bremsphase relativ zur Vorderachse überbremst.

Mit der Fahrerbremsanforderung 19 ab dem Zeitpunkt t1 steuert die Bremssteuereinheit Bremsdruck an den Radbremsen aus. Mit dem Vorliegen einer Fahrerbremsanforderung 19 zum Zeitpunkt t1 wird der aktuelle Differenzschlupfwert 42 als Offsetwert 69 für eine spätere Ermittlung des Bremsverteilungsindex 41 bereitgehalten. Der Offsetwert 69 entspricht daher dem Differenzschlupf vor Beginn der Bremsung beziehungsweise der Bremswirkung. Zum Zeitpunkt t2 erreicht der Bremsdruck einen Ansprechdruck P-rp der Radbremsen, bei dem die Radbremsen unter der Wirkung des Bremsdrucks ansprechen.

Zum Zeitpunkt t3 wird die elektronische Bremskraftverteilung (Bezugszeichen 48 in Fig. 2) aktiv und begrenzt den Bremsdruck P-HA an der Hinterachse. Dieses erfolgt beispielsweise dann, wenn der der Differenzschlupfwert 42 einen vorgegebenen Grenzwert erreicht und/oder andere Kriterien für eine Aktivierung erfüllt sind. Die Begrenzung des Bremsdrucks P-HA an der Hinterachse ist in der grafischen Darstellung durch den Aktivierungsstatus 51 der elektronischen Bremskraftverteilung 48 dargestellt. Im weiteren Verlauf der Bremsung nach der Aktivierung der elektronischen Bremskraftverteilung 48 und Begrenzung des Bremsdrucks P-HA an der Hinterachse steigt der Bremsdruck P-VA an der Vorderachse mit weiter ansteigender Fahrerbremsanforderung 19 weiter an.

Zur Ermittlung des Bremsverteilungsindex 41 wird in einem ersten Bewertungsintervall 53 zwischen dem Startzeitpunkt 64 des ersten Bewertungsintervalls und dessen Endzeitpunkt 67 die Veränderung 47 des aktuellen Differenzschlupfwerts 42 gegenüber einem Kennwert 54 des Differenzschlupfs zum Startzeitpunkt 64 bezogen auf das Bewertungsintervall 53, das heißt den durch das Bewertungsintervall 53 definierten Zeitraum, ermittelt. Für die Bestimmung des Startzeitpunkts 64 des ersten Bewertungsintervalls 53 wird der Zeitpunkt t2 erfasst, zu welchem der Bremsdruck einen vorgegebenen Schwellwert 50 überschreitet. Als dieser Schwellwert 50 wird im gezeigten Ausführungsbeispiel der Ansprechdruck P-rp der Radbremsen berücksichtigt. Zum Zeitpunkt t2, wenn also der Ansprechdruck P-rp an den Radbremsen vorliegt, wird der aktuelle Wert des Differenzschlupfs 42 als Kennwert 54 erfasst, um die Veränderung des Differenzschlupfwerts 42 während des Bewertungsintervalls 53 gegenüber diesem Kennwert 54 ermitteln zu können. Die Veränderung des aktuellen Differenzschlupfwerts 42 gegenüber dem als Offset berücksichtigten Kennwert 54 entspricht grafisch dem Steigungswinkel β einer Geraden 68, welche durch den Kennwert 54 und den aktuellen Wert des Differenzschlupfwert 42 zum Endzeitpunkt 67 des Bewertungsintervalls 53 definiert ist. Durch Auswertung der Veränderung beziehungsweise des Steigungswinkels β der Geraden 68 liegt eine Größe vor, dem der Bremsverteilungsindex 41 quantitativ entspricht. Der Endzeitpunkt 67 des ersten Bewertungsintervalls 53 ist durch den Zeitpunkt t3 der Aktivierung der elektronischen Bremskraftverteilung bestimmt.

Ab dem Zeitpunkt t3 der Aktivierung der elektronischen Bremskraftverteilung 48 und der damit einhergehenden Begrenzung des Bremsdrucks P-HA an der Hinterachse wird der Bremsverteilungsindex 41 in einem zweiten Bewertungsintervall 55 auf eine Weise ermittelt, welche von der Ermittlung des Bremsverteilungsindex 41 ohne Bremsdruckbegrenzung abweicht. Während des zweiten Bewertungsintervalls 55 wird der Wert P3 der Fahrerbremsanforderung 19 zum Startzeitpunkt 65 des zweiten Bewertungsintervalls 55 und der Wert P4 der Fahrerbremsanforderung 19 zum Endzeitpunkt 66 des zweiten Bewertungsintervalls 55 herangezogen. Der Startzeitpunkt wird dabei durch den Zeitpunkt t3 der Begrenzung des Bremsdrucks durch die Aktivierung der elektronischen Bremskraftverteilung 48 bestimmt.

Der Endzeitpunkt 66 des zweiten Bewertungsintervalls 55 wird angenommen als der Zeitpunkt t4, bei dem der Differenzschlupfwert 42 wieder den vor Beginn der Bremswirkung zum Zeitpunkt t1 erfassten Offsetwert 69 des Differenzschlupfs erreicht. Der Bremsverteilungsindex ergibt sich dabei als Quotient des Wertes P3 der Fahrerbremsanforderung 19 zum Startzeitpunkt 65 (Zeitpunkt t3) und dem Wert P4 der Fahrerbremsanforderung 19 zum Endzeitpunkt 66 (Zeitpunkt t4) des zweiten Bewertungsintervalls 55. Dabei wird in dem Quotient jeweils von den Werten P3, P4 der Wert des Ansprechdrucks P-rp abgezogen, um zu einem genauen und repräsentativen Bremsverteilungsindex 41 zu kommen. Der Quotient zur Ermittlung des Bremsleistungsindex 41 ergibt sich somit aus dem Term (P4 - P-rp) / (P3 - P-rp).

Erreicht der Differenzschlupfwert 42 nicht den Offsetwert 69, so wird ein voraussichtlicher Wert der Fahrerbremsanforderung 19 zum Endzeitpunkt 66 durch Extrapolation mit linearer Interpolation der Fahrerbremsanforderung 19 zum Zeitpunkt t3 der Aktivierung der elektronischen Bremskraftverteilung und dem höchsten im zweiten Bewertungsintervall 55 erfassten Wert 70 der Fahrerbremsanforderung 19 in Richtung des voraussichtlichen Endzeitpunkts 66 angenommen, zudem der Differenzschlupfwert 42 gleich dem Offsetwert 69 sein würde.

Die Bremssteuereinheit ermittelt im Normalbremsmodus 18 für verschiedene Achsenpaare 46 jeweils Bremsverteilungsindices 41, welche in einem Speicherelement 56 für die Berücksichtigung im Drucksteuermodus 24 bereitgehalten werden. Dabei werden Bremsverteilungsindices 41 jeweils bezogen auf eine bestimmte Referenzachse ermittelt, vorzugsweise die Vorderachse des Kraftfahrzeugs. Für das Anhängefahrzeug 57 werden entsprechend Bremsverteilungsindices 41 für die jeweiligen Achsen jeweils bezogen auf die Vorderachse des Kraftfahrzeugs ermittelt.

### Bezugszeichenliste (Bestandteil der Beschreibung)

1. Bremsanlage
2. Fahrzeug
3. Vorderachse
4. Hinterachse
5. Rad
6. Radbremse
7. Bremszylinder
8. Federspeicher
9. Bremspedal
10. Betriebsbremsventil
11.Bremsleitung
12. Druckmittelvorrat
13. erster Bremskreis
14. zweiter Bremskreis
15.zweiter Druckmittelvorrat
16. Relaisventil
17.Relaisventil
18. Normalbremsmodus
19. Fahrerbremsanforderung
20. Drucksteuerventil
21. Bremssteuereinheit
22. Einlassventil
23.Auslassventil
24. Drucksteuermodus
25.3/2-Wege-Ventil
26. Druckleitung
27.dritter Druckmittelvorrat
28. Doppelrückschlagventil
29. Drehzahlsensor
30.externe Bremsanforderung
31.Steuersignal Einlassventil
32. Steuersignal Auslassventil
33. Antiblockierfunktion
34. Messsignal
35. Moduserfassung
36. Ermittlung
37.Schlupfbestimmung
38.Schlupf
39. Aktivierung
40. Gewichtung
41. Bremsleistungsindex
42. Differenzschlupfwert
43. Bremssignalgeber
44. Bremsleitung
45. Bewertung
46.Achsenpaar
47. Veränderung
48. Elektronische Bremskraftverteilung
49. Nulllinie
50. Schwellwert
51.Aktivierungsstatus
52. Differenzbestimmung
53. Erstes Bewertungsintervall
54. Bezugswert
55.Zweites Bewertungsintervall
56. Speicherelement
57. Anhängefahrzeug
58. Bremsdruckleitung Anhänger
59. vierter Druckvorrat
60. Kontrollventil
61. Kupplungskopf
62. CAN-Schnittstelle
63. dritter Bremskreis
64. Startzeitpunkt
65. Startzeitpunkt
66. Endzeitpunkt
67. Endzeitpunkt
68. Gerade
69. Offsetwert
70. Wert
71. Kraftfahrzeug
lSP Bremsdruck
P-VA Bremsdruck Vorderachse
P-HA Bremsdruck Hinterachse
P3 Wert Fahrerbremsanforderung
P4 Wert Fahrerbremsanforderung
P-rp Ansprechdruck
Z-int interner Verzögerungswert
Z-ext externer Verzögerungswert
Z-RES resultierender Verzögerungswert
Z-ist Ist-Verzögerung
t1 Zeitpunkt
t2 Zeitpunkt
t3 Zeitpunkt
t4 Zeitpunkt
β Steigungswinkel
v Fahrzeuggeschwindigkeit

## Patentansprüche

1. Verfahren zum Einstellen von Bremsdrücken (P, P-VA, P-HA) an pneumatisch betätigten Radbremsen (6) eines Fahrzeugs (2), wobei ein Bremsdruck (P) an den Radbremsen (6) in einem Normalbremsmodus (18) in Abhängigkeit einer vom Fahrer des Fahrzeugs (2) bestimmten Fahrerbremsanforderung (19) eingestellt wird, und wobei eine Bremssteuereinheit (21) zur Umsetzung von Fahrstabilitätsfunktionen, nämlich wenigstens einer Antiblockierfunktion (33), sowie zur Umsetzung von von der Fahrerbremsanforderung (19) unabhängigen externen Bremsanforderungen (30) die Einstellung des Bremsdrucks (P, P-VA, P-HA) in einem Drucksteuermodus (24) übernimmt, indem die Bremssteuereinheit (21) im Drucksteuermodus (24) Steuersignale (31, 32) für Drucksteuerventile (20) der jeweiligen Radbremsen (6) ermittelt und durch Ansteuerung der Drucksteuerventile (20) den Bremsdruck (P, P-VA, P-HA) der betreffenden Radbremse (6) verändert,
wobei die Bremssteuereinheit (21) im Normalbremsmodus (18)
- laufend wenigstens einen Differenzschlupfwert (42) als Differenz zwischen den Schlupfwerten (38) zweier Räder (5) oder Achsen (3, 4) des Fahrzeugs (2) bestimmt und
- durch Bewertung (45) der Veränderung des Differenzschlupfwerts (42) innerhalb eines Bewertungsintervalls (53, 55) einen zwischenachsigen Bremsverteilungsindex (41) für das betreffende Achsenpaar (46) ermittelt
und wobei die Bremssteuereinheit (21) im Drucksteuermodus (24) den im Normalbremsmodus (18) ermittelten zwischenachsigen Bremsverteilungsindex (41) zur Gewichtung (40) der Steuersignale (31, 32) für das jeweilige Achsenpaar (46) heranzieht,
**dadurch gekennzeichnet, dass**
eine auf ein erstes Bewertungsintervall (53) zeitbezogene Veränderung (47) des aktuellen Differenzschlupfwerts (42) gegenüber einem Kennwert (54) zum Startzeitpunkt (64) des ersten Bewertungsintervalls (53) ermittelt und der Bremsverteilungsindex (41) quantitativ der zeitbezogenen Veränderung (47) des aktuellen Differenzschlupfwerts (42) entsprechend bestimmt wird.

2. Verfahren nach Anspruch 1,
**dadurch gekennzeichnet, dass**
als Startzeitpunkt (64) des ersten Bewertungsintervalls (53) derjenige Zeitpunkt (t2) erfasst wird, zu dem der Bremsdruck (P, P-VA, P-HA) einen vorgegebenen Schwellwert (50) überschreitet.

3. Verfahren nach Anspruch 2,
**gekennzeichnet durch**
den Ansprechdruck (P-rp) der Radbremsen (6) als Schwellwert (50) zur Erfassung des Startzeitpunkts (64) des ersten Bewertungsintervalls (53).

4. Verfahren nach einem der vorhergehenden Ansprüche,
**dadurch gekennzeichnet, dass**
der Bremsverteilungsindex (41) in einem zweiten Bewertungsintervall (55) entsprechend einer Veränderung der Fahrerbremsanforderung (19) zwischen einem Wert (P3) der Fahrerbremsanforderung (19) zum Startzeitpunkt (65) des zweiten Bewertungsintervalls (55) und einem Wert (P4) der Fahrerbremsanforderung (19) zu einem Endzeitpunkt (66) des zweiten Bewertungsintervalls (55) ermittelt wird, welcher Endzeitpunkt (66) bei einem Differenzschlupfwert (42) gleich einem vorgegebenen oder ermittelten Offsetwert (69) angenommen wird.

5. Verfahren nach Anspruch 4,
**dadurch gekennzeichnet, dass**
der Bremsverteilungsindex (41) quantitativ entsprechend einem Quotient des Werts (P3) der Fahrerbremsanforderung (19) zum Startzeitpunkt (65) und des Werts (P4) der Fahrerbremsanforderung (19) zum Endzeitpunkt (66) des zweiten Bewertungsintervalls (55) bestimmt wird.

6. Verfahren nach Anspruch 4 oder 5,
**dadurch gekennzeichnet, dass**
bei der Ermittlung des Bremsverteilungsindex (41) im zweiten Bewertungsintervall (55) der Aktivitätsstatus (51) einer elektronischen Bremskraftverteilung (48) berücksichtigt wird und als Startzeitpunkt (65) der Zeitpunkt der Aktivierung der elektronischen Bremskraftverteilung (48) angenommen wird.

7. Verfahren nach einem der Ansprüche 4 bis 6,
**dadurch gekennzeichnet, dass**
als Offsetwert (69) ein Differenzschlupfwert (42) zu einem Zeitpunkt (t1), vor Beginn der Bremswirkung der Radbremsen (6) ermittelt wird.

8. Verfahren nach einem der Ansprüche 4 bis 7,
**dadurch gekennzeichnet, dass**
der Wert (P4) der Fahrerbremsanforderung (19) zum Endzeitpunkt (66), bei dem ein Differenzschlupfwert (42) entsprechend dem Bezugswert (54) angenommen wird, mittels Extrapolation unter Berücksichtigung der Fahrerbremsanforderung (19) zum Zeitpunkt (t3) der Aktivierung der elektronischen Bremskraftverteilung (48) und dem höchsten im zweiten Bewertungsintervall (55) erfassten Wert (70) der Fahrerbremsanforderung (19) und deren linearer Interpolation in Richtung des voraussichtlichen Endzeitpunkts (66) mit einem Differenzschlupfwert (42) gleich dem Offsetwert (69) ermittelt wird.

9. Verfahren nach einem der vorhergehenden Ansprüche,
**dadurch gekennzeichnet, dass**
zwischenachsige Bremsverteilungsindices (41) für mehrere Räder- oder Achsenpaare (46) mit einer in allen Räder- oder Achsenpaaren (46) berücksichtigte Achse (3) ermittelt werden.

10. Bremsanlage eines Fahrzeugs (2) zur Druckführung des Verfahrens nach einem der Ansprüche 1 bis 9, mit pro Rad (5) einem Bremszylinder (7) und einem Drucksteuerventil (20), die zum Empfang von Steuersignalen (31, 32) während eines Drucksteuermodus (24) mit einer Bremssteuereinheit (21) signalübertragend verbunden sind, sowie einem vom Fahrer des Fahrzeugs (2) betätigbaren Betriebsbremsventil (10) und einem Bremssignalgeber (43), wobei die Bremsdrücke (P, P-VA, P-HA) in den Bremszylindern (7) in einem Normalbremsmodus (18) in Abhängigkeit einer Fahrerbremsanforderung (19) durch Betätigung des Betriebsbremsventils (10) und in einem Drucksteuermodus (24) über das jeweilige Drucksteuerventil (20) von der Bremssteuereinheit (21) einstellbar sind, wobei die Bremssteuereinheit (21)
- zur Umsetzung von Fahrstabilitätsfunktionen, nämlich wenigstens einer Antiblockierfunktion (33), sowie zur Umsetzung von von der Fahrerbremsanforderung (19) unabhängigen externen Bremsanforderungen (30) im Drucksteuermodus (24) ausgebildet ist und zur Übertragung von Messsignalen (34) mit Drehzahlsensoren (29) der Räder (5) verbunden ist,
- zur Bestimmung von Differenzschlupfwerten (42) aus den Messsignalen (34) der Drehzahlsensoren (29) als Differenz zwischen dem Schlupf (38) zweier Achsen (3, 4) des Fahrzeugs (2) und
- zur Ermittlung eines zwischenachsigen Bremsverteilungsindex (41) für das betreffende Achsenpaar (46) durch Bewertung (45) der Veränderung (47) des Differenzschlupfwerts (42) innerhalb eines Bewertungsintervalls (53, 55) im Normalbremsmodus (18) sowie
- zur Gewichtung (40) der Steuersignale (31, 32) für das betreffende Achsenpaar (46) im Drucksteuermodus (24) mit dem zwischenachsigen Bremsverteilungsindex (41) konfiguriert ist,
**dadurch gekennzeichnet, dass** die Bremssteuereinheit (21) konfiguriert ist, eine auf ein erstes Bewertungsintervall (53) zeitbezogene Veränderung (47) des aktuellen Differenzschlupfwerts (42) gegenüber einem Kennwert (54) zum Startzeitpunkt (64) des ersten Bewertungsintervalls (53) zu ermitteln und den Bremsverteilungsindex (41) quantitativ der zeitbezogenen Veränderung (47) des aktuellen Differenzschlupfwerts (42) entsprechend zu bestimmen.

11. Fahrzeug mit einer Bremsanlage nach Anspruch 10, zur Durchführung eines Verfahrens nach einem der Ansprüche 1 bis 9.

12. Fahrzeug nach Anspruch 11,
**dadurch gekennzeichnet, dass**
das Fahrzeug (2) ein Kraftfahrzeug (71) und/oder ein Anhängefahrzeug (57) eines Kraftfahrzeugs (71) ist.

## Claims

1. A method for adjusting brake pressures (P, P-VA, P-HA) on pneumatically actuated wheel brakes (6) of a vehicle (2), wherein a brake pressure (P) on the wheel brakes (6) is adjusted in a normal braking mode (18) as a function of a driver braking demand (19) that is determined by a driver of the vehicle (2), and wherein a brake control unit (21), for implementation of driving stability functions, to wit, at least one anti-lock function (33), as well as for implementation of external braking demands (30) independent of the driver braking demand (19), undertakes adjustment of the brake pressures (P, P-VA, P-HA) in a pressure control mode (24), in that the brake control unit (21) determines control signals (31, 32) for pressure control valves (20) of the respective wheel brakes (6) in the pressure control mode (24) and changes the brake pressures (P, P-VA, P-HA) of the relevant wheel brakes (6) by actuating the pressure control valves (20),
wherein the brake control unit (21) in the normal braking mode (18)
- continuously determines at least one differential slip value (42) as a difference between slip values (38) of two wheels (5) or axles (3, 4) of the vehicle (2), and
- determines an interaxle braking distribution index (41) for a relevant pair of axles (46) by an assessment (45) of a change in the differential slip value (42) within an evaluation interval (53, 55)
and wherein the brake control unit (21) in the pressure control mode (24) uses the interaxle braking distribution index (41) that is determined in the normal braking mode (18) for the weighting (40) of the control signals (31, 32) for the respective pair of axles (46),
**characterized in that**
a time-related change (47) to a first evaluation interval (53) of the current differential slip value (42) relative to a characteristic value (54) at a starting time (64) of a first evaluation interval (53) is determined and the interaxle braking distribution index (41) is quantitatively determined according to a time-related change (47) in the current differential slip value (42).

2. The method according to claim 1,
**characterized in that**
a time (t2) at which a brake pressure (P, P-VA, P-HA) exceeds a specified threshold value (50) is detected as the starting time (64) of the first evaluation interval (53).

3. The method according to claim 2,
**characterized by**
the response pressure (P-rp) of the wheel brakes (6) as the threshold value (50) for detecting the starting time (64) of the first evaluation interval (53).

4. The method according to any of the preceding claims,
**characterized in that**
the braking distribution index (41) in a second evaluation interval (55) is determined according to a change in the driver braking demand (19) between a value (P3) of the driver braking demand (19) at a starting time (65) of the second evaluation interval (55) and a value (P4) of the driver braking demand (19) at an end time (66) of the second evaluation interval (55), which end time (66) is adopted in case of a differential slip value (42) that is equal to a specified or determined offset value (69).

5. The method according to claim 4,
**characterized in that**
the braking distribution index (41) is quantitatively determined according to a quotient of the value (P3) of the driver braking demand (19) at the starting time (65) and the value (P4) of the driver braking demand (19) at the end time (66) of the second evaluation interval (55).

6. The method according to claim 4 or 5,
**characterized in that**
during the determination of the braking distribution index (41) in the second evaluation interval (55), an activity status (51) of an electronic braking force distribution function (48) is taken into account and a time of the activation of the electronic braking force distribution function (48) is adopted as the starting time (65).

7. The method according to any of claims 4 to 6,
**characterized in that**
a differential slip value (42) at a time (t1) before a start of the braking effect of the wheel brakes (6) is determined as the offset value (69).

8. The method according to any of claims 4 to 7,
**characterized in that**
the value (P4) of the driver braking demand (19) at the end time (66), at which a differential slip value (42) corresponding to the reference value (54) is adopted, is determined by extrapolation while taking into account the driver braking demand (19) at the time (t3) of the activation of the electronic braking force distribution (48) and the highest value (70) of the driver braking demand (19) that is detected in the second evaluation interval (55) and the linear interpolation thereof towards the expected end time (66) with a differential slip value (42) equal to the offset value (69).

9. The method according to any of the preceding claims,
**characterized in that**
interaxle braking distribution indices (41) are determined for multiple pairs of wheels or pairs of axles (46) with an axle (3) that is taken into account for all pairs of wheels or pairs of axles (46).

10. A brake system of a vehicle (2) for pressure guiding of the method according to any of claims 1 to 9, comprising per wheel (5) a brake cylinder (7) and a pressure control valve (20) which are connected to a brake control unit (21) in a signal-transmitting manner for the reception of control signals (31, 32) during a pressure control mode (24), as well as a service brake valve (10) that is operated by the driver of the vehicle (2) and a brake signal sender (43), wherein the brake pressures (P, P-VA, P-HA) in the brake cylinders (7) in a normal braking mode (18) are configured to be adjusted as a function of a driver braking demand (19) by operating the service brake valve (10), and in a pressure control mode (24) by the brake control unit (21) via the respective pressure control valve (20), wherein the brake control unit (21)
- is designed for implementing driving stability functions, to wit, at least one anti-lock function (33), as well as for implementing external braking demands (30) independent of the driver braking demand (19) in the pressure control mode (24), and is connected to revolution rate sensors (29) of the wheels (5) for transmitting measurement signals (34),
- is configured for determining differential slip values (42) from the measurement signals (34) of the revolution rate sensors (29) as the difference between a slip (38) of two axles (3, 4) of the vehicle (2) and
- for determining an interaxle brake distribution index (41) for a relevant pair of axles (46) by assessment (45) of a change (47) in the differential slip value (42) within an evaluation interval (53, 55) in the normal braking mode (18) as well as
- for weighting (40) the control signals (31, 32) for the relevant pair of axles (46) in the pressure control mode (24) with the interaxle braking distribution index (41), **characterized in that** the brake control unit (21) is configured to determine a time-related change (47) to a first evaluation interval (53) in the current differential slip value (42) relative to a characteristic value (54) at a starting time (64) of a first evaluation interval (53) and to quantitatively determine the interaxle braking distribution index (41) according to a time-related change (47) in the current differential slip value (42).

11. A vehicle with a brake system according to claim 10, for carrying out a method according to any of claims 1 to 9.

12. The vehicle according to claim 11,
**characterized in that**
the vehicle (2) is a motor vehicle (71) and/or a trailer vehicle (57) of a motor vehicle (71).

## Revendications

1. Procédé pour régler des pressions de freinage (P, P-VA, P-HA) sur des freins sur roue (6) actionnés pneumatiquement d'un véhicule (2), dans lequel une pression de freinage (P) sur les freins sur roue (6) dans un mode de freinage normal (18) est réglée en fonction d'une demande de freinage de conducteur (19) définie par le conducteur du véhicule (2), et dans lequel une unité de commande de freinage (21), pour la mise en œuvre de fonctions de stabilité de conduite, à savoir d'au moins une fonction antiblocage des roues (33), ainsi que pour la mise en œuvre de demandes de freinage externes (30) indépendantes de la demande de freinage de conducteur (19), prend en charge le réglage de la pression de freinage (P, P-VA, P-HA) dans un mode de commande de pression (24), du fait que l'unité de commande de freinage (21) dans le mode de commande de pression (24) détermine des signaux de commande (31, 32) pour des soupapes de commande de pression (20) des freins sur roue (6) respectifs et, par commande des soupapes de commande de pression (20), modifie la pression de freinage (P, P-VA, P-HA) du frein sur roue (6) concerné,
dans lequel l'unité de commande de freinage (21) dans le mode de freinage normal (18)
- définit constamment au moins une valeur de glissement différentiel (42) comme différence entre les valeurs de glissement (38) de deux roues (5) ou essieux (3, 4) du véhicule (2) et
- par évaluation (45) de la modification de la valeur de glissement différentiel (42) à l'intérieur d'un intervalle d'évaluation (53, 55), détermine un indice de répartition de freinage (41) entre essieux pour la paire d'essieux (46) concernée
et dans lequel l'unité de commande de freinage (21) dans le mode de commande de pression (24) se sert de l'indice de répartition de freinage (41) entre essieux déterminé dans le mode de freinage normal (18) pour la pondération (40) des signaux de commande (31, 32) pour la paire d'essieux (46) respective,
**caractérisé en ce que**
une modification liée au temps (47) sur un premier intervalle d'évaluation (53) de la valeur de glissement différentiel (42) actuelle par rapport à une valeur caractéristique (54) au moment de démarrage (64) du premier intervalle d'évaluation (53) est déterminée et l'indice de répartition de freinage (41) est défini de manière quantitative en fonction de la modification liée au temps (47) de la valeur de glissement différentiel (42) actuelle.

2. Procédé selon la revendication 1,
**caractérisé en ce que**
le moment (t2) auquel la pression de freinage (P, P-VA, P-HA) dépasse une valeur seuil (50) prédéfinie est détecté comme moment de démarrage (64) du premier intervalle d'évaluation (53) .

3. Procédé selon la revendication 2,
**caractérisé par**
la pression de réponse (P-rp) des freins sur roue (6) en tant que valeur seuil (50) pour la détection du moment de démarrage (64) du premier intervalle d'évaluation (53).

4. Procédé selon l'une quelconque des revendications précédentes,
**caractérisé en ce que**
l'indice de répartition de freinage (41) est déterminé dans un deuxième intervalle d'évaluation (55) de manière correspondante à une modification de la demande de freinage de conducteur (19) entre une valeur (P3) de la demande de freinage de conducteur (19) au moment de démarrage (65) du deuxième intervalle d'évaluation (55) et une valeur (P4) de la demande de freinage de conducteur (19) à un moment de fin (66) du deuxième intervalle d'évaluation (55), lequel moment de fin (66) est adopté lorsqu'une valeur de glissement différentiel (42) est identique à une valeur de décalage (69) prédéfinie ou déterminée.

5. Procédé selon la revendication 4,
**caractérisé en ce que**
l'indice de répartition de freinage (41) est défini de manière quantitative en fonction d'un quotient de la valeur (P3) de la demande de freinage de conducteur (19) au moment de démarrage (65) et de la valeur (P4) de la demande de freinage de conducteur (19) au moment de fin (66) du deuxième intervalle d'évaluation (55).

6. Procédé selon la revendication 4 ou 5,
**caractérisé en ce que**
lors de la détermination de l'indice de répartition de freinage (41) dans le deuxième intervalle d'évaluation (55), le statut d'activité (51) d'une répartition de force de freinage électronique (48) est pris en compte et le moment de l'activation de la répartition de force de freinage électronique (48) est adopté comme moment de démarrage (65).

7. Procédé selon l'une quelconque des revendications 4 à 6,
**caractérisé en ce que**
une valeur de glissement différentiel (42) à un moment (t1) précédant le début de l'action de freinage des freins sur roue (6) est déterminée comme valeur de décalage (69).

8. Procédé selon l'une quelconque des revendications 4 à 7,
**caractérisé en ce que**
la valeur (P4) de la demande de freinage de conducteur (19) au moment de fin (66) auquel une valeur de glissement différentiel (42) correspondant à la valeur de référence (54) est adoptée est déterminée par extrapolation avec prise en compte de la demande de freinage de conducteur (19) au moment (t3) de l'activation de la répartition de force de freinage électronique (48) et de la valeur (70) maximale de la demande de freinage de conducteur (19) détectée dans le deuxième intervalle d'évaluation (55) et de son interpolation linéaire en direction du moment de fin (66) prévisible avec une valeur de glissement différentiel (42) identique à la valeur de décalage (69).

9. Procédé selon l'une quelconque des revendications précédentes,
**caractérisé en ce que**
des indices de répartition de freinage (41) entre essieux sont déterminés pour plusieurs paires de roues ou d'essieux (46) avec un essieu (3) pris en compte dans toutes les paires de roues ou d'essieux (46).

10. Système de freinage d'un véhicule (2) pour le guidage de pression du procédé selon l'une quelconque des revendications 1 à 9, avec par roue (5) un cylindre de frein (7) et une soupape de commande de pression (20), qui sont reliées de manière à transmettre des signaux à une unité de commande de freinage (21) pour la réception de signaux de commande (31, 32) pendant un mode de commande de pression (24), ainsi qu'une soupape de frein de service (10) pouvant être actionnée par le conducteur du véhicule (2) et un générateur de signal de freinage (43), dans lequel les pressions de freinage (P, P-VA, P-HA) dans les cylindres de frein (7) dans un mode de freinage normal (18) peuvent être réglées en fonction d'une demande de freinage de conducteur (19) par actionnement de la soupape de frein de service (10) et dans un mode de commande de pression (24) par l'unité de commande de freinage (21) par l'intermédiaire de la soupape de commande de pression (20) respective, dans lequel l'unité de commande de freinage (21)
- est réalisée pour la mise en œuvre de fonctions de stabilité de conduite, à savoir d'au moins une fonction antiblocage des roues (33), ainsi que pour la mise en œuvre de demandes de freinage externes (30) indépendantes de la demande de freinage de conducteur (19) dans le mode de commande de pression (24), et est reliée à des capteurs de vitesse de rotation (29) des roues (5) pour la transmission de signaux de mesure (34),
- est configurée pour la définition de valeurs de glissement différentiel (42) à partir des signaux de mesure (34) des capteurs de vitesse de rotation (29) comme différence entre le glissement (38) de deux essieux (3, 4) du véhicule (2) et
- pour la détermination d'un indice de répartition de freinage (41) entre essieux pour la paire d'essieux (46) concernée par évaluation (45) de la modification (47) de la valeur de glissement différentiel (42) à l'intérieur d'un intervalle d'évaluation (53, 55) dans le mode de freinage normal (18) ainsi que
- pour la pondération (40) des signaux de commande (31, 32) pour la paire d'essieux (46) concernée dans le mode de commande de pression (24) avec l'indice de répartition de freinage (41) entre essieux,
**caractérisé en ce que** l'unité de commande de freinage (21) est configurée pour déterminer une modification liée au temps (47) sur un premier intervalle d'évaluation (53) de la valeur de glissement différentiel (42) actuelle par rapport à une valeur caractéristique (54) au moment de démarrage (64) du premier intervalle d'évaluation (53) et pour définir l'indice de répartition de freinage (41) de manière quantitative en fonction de la modification liée au temps (47) de la valeur de glissement différentiel (42) actuelle.

11. Véhicule avec un système de freinage selon la revendication 10, pour la mise en œuvre d'un procédé selon l'une quelconque des revendications 1 à 9.

12. Véhicule selon la revendication 11,
**caractérisé en ce que**
le véhicule (2) est un véhicule à moteur (71) et/ou un véhicule tracté (57) d'un véhicule à moteur (71).
